# EUROPEAN PATENT SPECIFICATION

(11) **EP 3 628 548 B1**
(45) Date of publication and mention of the grant of the patent: **14.04.2021**
(21) Application number: 19198507.6
(22) Date of filing: 20.09.2019
(51) Int. Cl.: B60R 25/09

(54) **A SECURITY SYSTEM**
SICHERHEITSSYSTEM
SYSTÈME DE SÉCURITÉ

(30) Priority: 28.09.2018 GB 201815812
(43) Date of publication of application: 01.04.2020
(73) Proprietor: Milenco Limited, Wolverton Mill Milton Keynes MK12 5TS (GB)
(72) Inventor: Milbank, Frederick Nigel, Milton Keynes, Buckinghamshire MK13 0RA (GB)
(74) Representative: Turner, Richard Charles

(56) References cited:
- CN-Y- 2 421 184
- GB-A- 2 263 454
- GB-A- 2 483 109

## Description

This invention relates to a security system.

Many types of vehicles are vulnerable to theft. A vehicle that is not being used and not being attended is a potential target for thieves. Therefore many vehicles are provided with one or more built in locks and/or security systems to try and prevent thefts or at least make the theft of the vehicle more difficult. In addition there is a market for security systems that are sold separately and used in addition to any existing built-in locking device. Thefts of caravans are a particular problem for caravan owners, since caravans typically stand idle for many weeks of the year and an unsecured caravan can easily be hitched to a vehicle and towed away.

United Kingdom Patent 2483109 discloses a wheel clamp for a vehicle which includes a shield having an immobilising arm. The immobilising arm is arranged to locate through an opening between the spokes of a wheel. The shield locates adjacent to the face of the wheel. The wheel clamp includes locking means in order to lock the shield to the wheel. The locking means comprises a first locking member which comprises a conventional wheel nut or wheel bolt but also provides engagement means in order for a second locking member to be engaged with and locked to the first locking member. Once installed, if the vehicle is attempted to be moved, then the rotation of the wheel also causes rotation of the wheel clamp which results in the immobilising arm striking or abutting a part of the vehicle. This prevents the vehicle being moved away and prevents the wheel from being further rotated.

The prior art wheel clamp described above has a number of weaknesses, principal amongst them being that the size of the engagement means provided on the wheel bolt means that a significant additional weight is provided onto the wheel bolt. Although this does not impact on the operation of the wheel clamp, on a vehicle such as a caravan which is not provided with a significant suspension that dampens vibration while the caravan is in motion, the wheel bolt plus the engagement means has a tendency to work loose. The additional weight provided by the engagement means can lead to the wheel bolt working loose and falling off, which results in the wheel clamp no longer being able to be used, but can also lead to the caravan wheel falling off while the caravan is being towed, which is very dangerous.

It is therefore an object of the invention to improve upon the known art.

According to the present invention, there is provided a security system for a vehicle wheel, the security system comprising a replacement wheel connector for connecting the vehicle wheel to a vehicle, the wheel connector comprising a body, a head connected to one end of the body and an extension from the head, the extension being smaller than the head, and a locking device comprising: an elongate body, a locking collar extending from one side of the elongate body and for connecting to the extension of the head of the wheel connector, a locking mechanism contained within the elongate body and for locking the locking collar onto the extension of the head of the wheel bolt, and an elongate bar extending from the one side of the elongate body and for passing through the vehicle wheel, wherein the locking collar extending from one side of the elongate body of the locking device is height adjustable such that the extension of the locking collar from the one side of the elongate body is adjustable.

Owing to the invention, it is possible to provide a security system that can be used on a vehicle such as a caravan that does not add significant additional weight to the wheel connector (such as a wheel nut or bolt). The extension on the wheel connector is smaller than the head of the wheel connector and this means that only a relatively small additional weight is present on the wheel connector. The replacement wheel connector is highly unlikely to work loose once it has been tightened in position, since its weight is not significantly different from that of a normal wheel connector. This significantly increases the safety of the security system compared to prior art systems.

The locking collar extending from one side of the elongate body of the locking device is height adjustable such that the extension of the locking collar from the one side of the elongate body is adjustable. The locking collar sticks out from the body of the locking device and is designed to be connected to and locked onto the extension on the head of the replacement wheel connector. By making the locking collar height adjustable, the security system can be closely fitted to a wide variety of different shapes and sizes of vehicle wheels. Before first being fixed to a vehicle wheel, a user can adjust the height of the locking collar to be best suit the dimensions of the wheel in question. This ensures that the tightest possible fit of the body of the locking device to the vehicle wheel can be achieved, which prevents any access to the rear of the elongate body by any potential thief. The height adjustability of the locking collar provides a better fit of the security system to a wide variety of different wheel sizes and shapes and provides a more secure security system.

Advantageously, the extension from the head of the replacement wheel connector is provided with a groove running around the extension. The provision of a groove on the extension provides a simple and effective means by which the locking mechanism can lock onto the replacement wheel connector. The locking mechanism preferably includes a three point male locking arrangement for engaging with the groove running around the extension from the head of the replacement wheel connector. This provides a simple and secure method for connecting these two components together. The locking mechanism can include a key driven lock, which when locked will cause the three point male locking arrangement to engage with the groove running around the extension

Embodiments of the present invention will now be described, by way of example only, with reference to the accompanying drawings, in which:-
Figure 1 is a view from above of a security system,
Figure 2 is a perspective view of a first embodiment of a replacement wheel connector in the form of a wheel bolt,
Figure 3 is a perspective view from the back of the security system,
Figure 4 is an exploded view of the components of the security system,
Figure 5 is a side view of the security system in use,
Figure 6 is a perspective view of the security system in use,
Figure 7 shows a perspective view from the side of a second embodiment of the replacement wheel connector in the form of a wheel nut, and
Figure 8 shows a side view of the wheel connector of Figure 7.

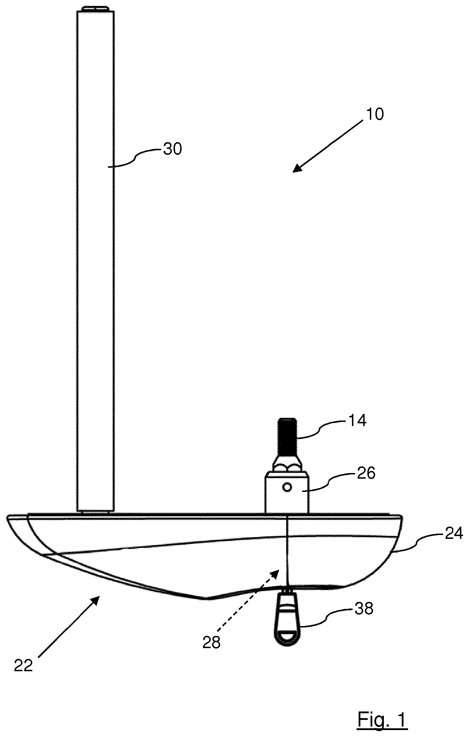

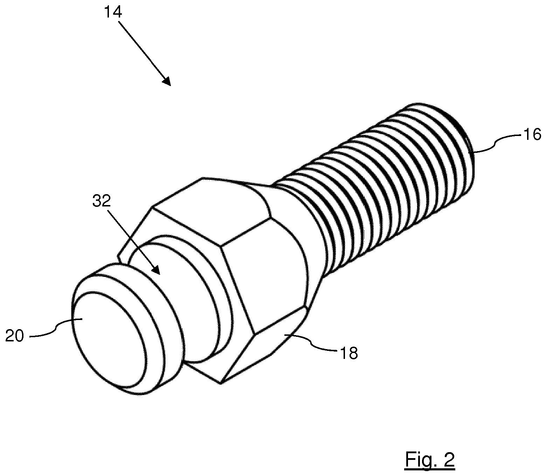

Figure 1 shows a security system 10 for a vehicle wheel, seen from above. The security system 10 comprises a replacement wheel connector 14, which is in the form of a wheel bolt 14, and a locking device 22. The wheel connector 14 (shown in more detail in Figure 2) is for connecting the vehicle wheel 12 to a vehicle and comprises a body 16, a head 18 connected to one end of the body 16 and an extension 20 from the head 18, the extension 20 being smaller than the head 18. The body 16 of the wheel connector 14 has an external thread thereon. The elongate body 24 of the locking device 22 comprises a flat surface on the one side and a curved surface on the opposite side.

The locking device 22 comprises an elongate body 24, a locking collar 26 extending from one side of the elongate body 24 and for connecting to the extension 20 of the head 18 of the wheel connector 14, a locking mechanism 28 contained within the elongate body 24 and for locking the locking collar 26 onto the extension 20 of the head 18 of the wheel bolt 14, and an elongate bar 30 extending from the one side of the elongate body 24 and for passing through the vehicle wheel 12. These elements form a single robust unit that helps to protect the vehicle to which it is fitted from theft.

The security system 10 shown in Figure 1 is shown with the wheel connector 14 connected to the locking collar 26 in order to show how the security system 10 is used. In this first embodiment, the replacement wheel bolt 14 is used instead of a conventional wheel bolt on a vehicle wheel. This provides a connection onto which the locking collar 26 can be locked by the user. The elongate bar 30 passes through the vehicle wheel and when the whole system 10 is fixed in place, the security system 20 ensures that the vehicle wheel cannot be rotated, since the elongate bar 30 will contact the suspension or other part of the vehicle, preventing rotation.

Figure 2 shows a perspective view of the replacement wheel bolt 14. Someone who wishes to use the security system 10 of Figure 1 must first replace a conventional wheel bolt that is being used to retain a wheel on the vehicle to be protected with the replacement wheel bolt 14. The user removes an existing retaining wheel bolt and replaces that wheel bolt with the replacement wheel bolt 14 shown in Figure 2. This wheel bolt 14 comprises a threaded body 16, a head 18 connected to one end of the threaded body 16 and an extension 20 from the head 18, the extension 20 being smaller than the head 18.

The extension 20 from the head 18 of the replacement wheel bolt 14 is provided with a groove 32 running around the extension 20. The groove 32 is the means by which the locking collar 26 can be fixed to the wheel bolt 14. The locking mechanism 28 includes a three point male locking arrangement for engaging with the groove 32 running around the extension 20 from the head 18 of the replacement wheel bolt 14. This three point male locking arrangement has three small bars that engage into the groove 32 and form the connection between the locking collar 26 and the wheel bolt 14, providing a strong and secure connection.

The locking mechanism 28 includes a key driven lock 34 (shown in Figure 1). When a user turns a key 38 in the lock 34, this causes the three point male locking arrangement to move into the groove 32, thereby locking together the locking collar 26 and the replacement wheel bolt 14. A secure connection is formed between these two components, while the replacement wheel bolt 14 is not overly heavier than a conventional wheel bolt. This means that when the locking device 22 is not being used and the vehicle wheel is turning normally, the replacement wheel bolt 14 does not work loose. The security system 10 provides security while also being safe.

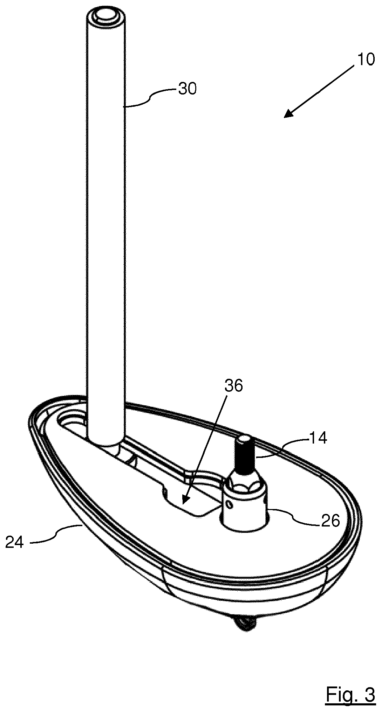

Figure 3 shows the security system 10 from the reverse. The elongate body 24 of the locking device 22 comprises a flat surface on the one side and a curved surface on the opposite side. Here the flat surface can be seen and this is the surface that contacts the wheel of the vehicle that is being secured. The elongate bar 30 is located in a slot 36 within the elongate body 24 of the locking device 22 and is slidable in the slot 36. The slot 36 is present in the flat surface of the elongate body 24. The use of the slot 36 is to allow the bar 30 to be positioned correctly, according to the gaps in the wheel being secured.

The locking collar 26 extending from one side of the elongate body 24 of the locking device 22 is height adjustable such that the extension of the locking collar 26 from the one side of the elongate body 24 is adjustable. The locking collar 26 pokes out from the elongate body 24 at the flat side of the elongate body 24. The locking collar 26 and the elongate bar 30 extend in the same plane and are parallel. To provide the best possible fit with the wheel being secured, the height of the locking collar 26 can be adjusted. An Allen key socket is provided which is connected to a mechanism that lowers or raises the locking collar 26 relative to the elongate body 24.

The replacement wheel bolt 14 is shown in Figure 3 as connected to the locking collar 26. This is to illustrate the connection between the two parts and shows the security system 10 as it would be retailed, with the two main components (the wheel bolt 14 and the locking device 22) of the security system 10 connected together in order to ensure that the wheel bolt 14 is not lost. In use, the wheel bolt 14 would be released from the locking collar 26 and used to replace a conventional wheel bolt on the wheel being protected, where the replacement wheel bolt 14 would then remain, with the locking device 22 kept separately, ready for use.

The slot 36 within the elongate body 24 of the locking device 22 includes an enlarged portion 36a for allowing the elongate bar 30 to be disconnected from the elongate body 24. The elongate bar 30 of the locking device 22 can be removed from the elongate body 24 by sliding the bar 30 along the slot 36 until the base of the bar 30 reaches the enlarged portion 36a. At this point, the bar 30 can be completely removed from the elongate body 24. This allows the security system 10 to be kept in a more compact arrangement, than if the bar 30 remained in the slot 36, and also allows the bar 30 to be replaced, if necessary.

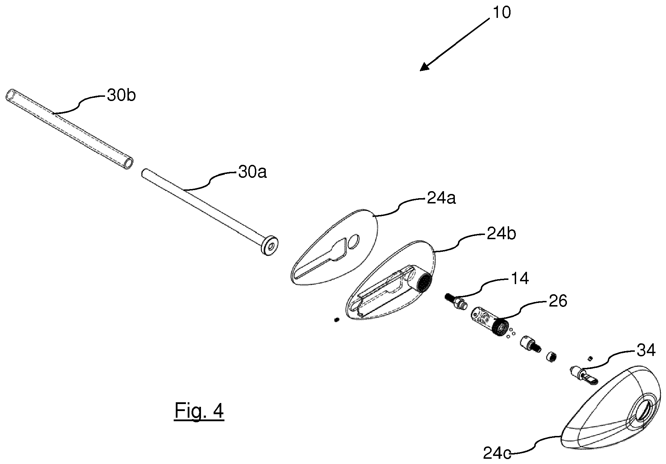

Figure 4 shows the components of the locking system 10 in an exploded form. The elongate body 24 comprises three main components, a flat outer surface 24a, an inner supporting component 24b and a curved outer surface 24c. The slot 36 can be seen in the flat outer surface 24a. The bar 30 comprises two separate components, an inner rod 30a and a robust cover 30b. The locking collar 26 can be seen, adjacent to the replacement wheel bolt 14. The lock 34 and key 38 are also present in this exploded view of the components; the lock 34 is located in use inside the elongate body 24, while the key 38 is removable from the lock 34.

The different components of the security system 10 can be constructed from robust materials such as metals and heavy duty plastics and resins. Once assembled, the security system 10 can be used by an end user to protect a vehicle from theft by connecting the security system 10 to a vehicle wheel. In use, the security system 10 prevents a vehicle from being stolen, since the vehicle wheel to which the security system 10 is connected cannot be fully rotated, since the bar 30 will engage with the underside of the vehicle, when the vehicle wheel is rotated for a short distance. Full normal rotation of the vehicle wheel cannot occur with the security system 10 in place.

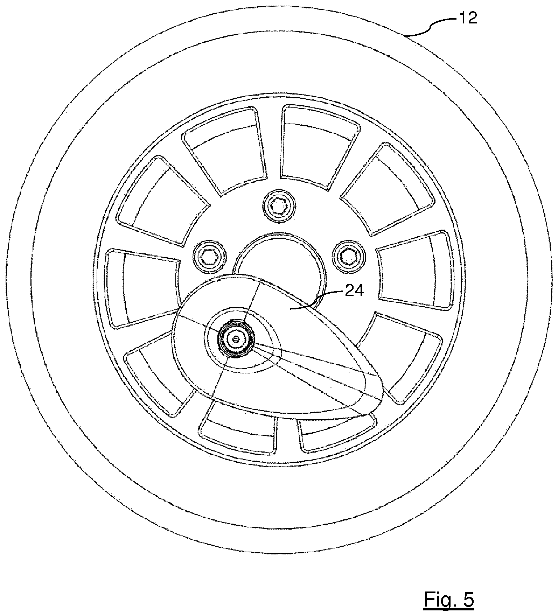

Figure 5 shows the security system 10 in use fixed to a vehicle wheel 12. From the outside of the security system 10 all that can be seen is the elongate body 24 of the locking device 22. The lock 34 is accessible by the user of the security system 10, but this can only be used with the correct key. The locking device 22 is locked onto the replacement wheel bolt 14 and the elongate bar 30 of the locking device 22 passes through the wheel 12 and prevents full rotation of the wheel 12. A vehicle which has the security system 10 fitted onto a vehicle wheel 12 cannot be stolen.

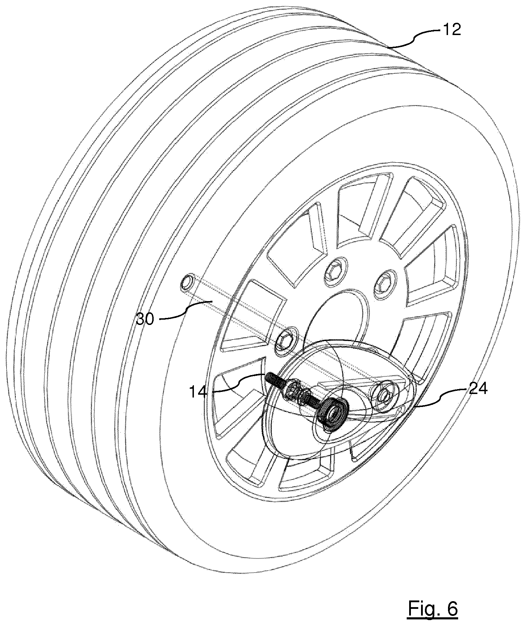

Figure 6 shows the same arrangement as that shown in Figure 5 of the security system 10 fixed onto a vehicle wheel 12, but this Figure shows the arrangement in a perspective view with the interior components that cannot be seen from the outside shown in dotted lines. The locking collar 26 of the locking device 22 locks onto the extension 20 of the replacement wheel bolt 14 and the elongate bar 30 passes through the wheel 12. The user therefore can fix the locking device 22 onto the wheel bolt 14 and the locking device 22 will be held securely in place and prevent the vehicle from being stolen.

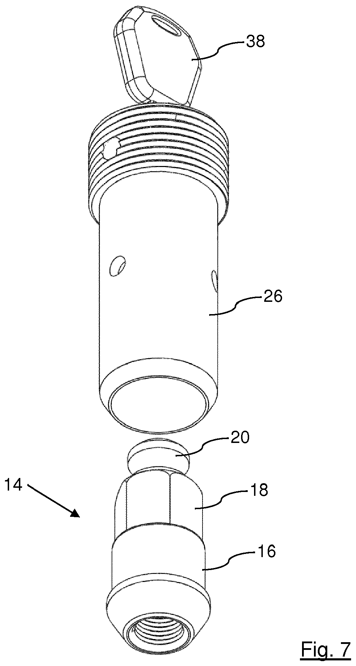

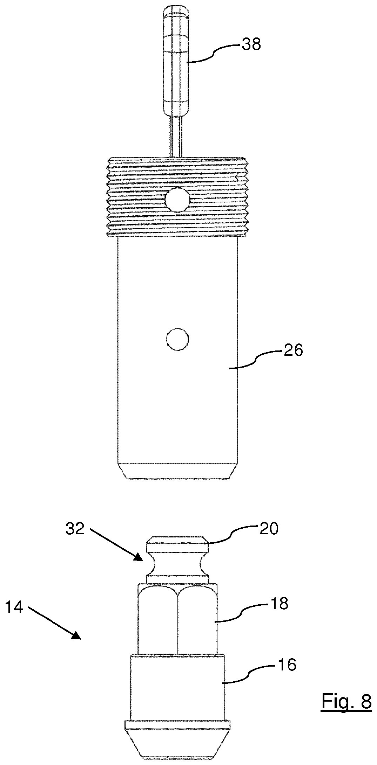

Figures 7 and 8 show a second embodiment of the replacement wheel connector 14, which here is in the form of a wheel nut 14, rather than the wheel bolt 14 of the first embodiment of the wheel connector 14. All other components within the security system 10 are the same, except that a replacement wheel nut 14 is being used. The wheel connector 14, as before, comprises a body 16, a head 18 connected to one end of the body 16 and an extension 20 from the head 18, the extension 20 being smaller than the head 18. The body 16 is provided with an internal thread. The extension 20 from the head 18 of the replacement wheel connector 14 is provided with a groove 32 running around the extension 20. Whether a wheel bolt or wheel nut is used in the security system 10 will depend upon the type of wheel fixing that is present in the vehicle being protected by the security system 10.

## Claims

1. A security system (10) for a vehicle wheel (12), the security system (10) comprising:
• a replacement wheel connector (14) for connecting the vehicle wheel (12) to a vehicle, the wheel connector (14) comprising a body (16), a head (18) connected to one end of the body (16) and an extension (20) from the head (18), the extension (20) being smaller than the head (18), and
• a locking device (22) comprising:
∘ an elongate body (24),
∘ a locking collar (26) extending from one side of the elongate body (24) and for connecting to the extension (20) of the head (18) of the wheel connector (14),
∘ a locking mechanism (28) contained within the elongate body (24) and for locking the locking collar (26) onto the extension (20) of the head (18) of the wheel connector (14), and
∘ an elongate bar (30) extending from the one side of the elongate body (24) and for passing through the vehicle wheel (12),
wherein the locking collar (26) extending from one side of the elongate body (24) of the locking device (22) is height adjustable such that the extension of the locking collar (26) from the one side of the elongate body (24) is adjustable.

2. A security system according to claim 1, wherein the extension (20) from the head (18) of the replacement wheel connector (14) is provided with a groove (32) running around the extension (20).

3. A security system according to claim 2, wherein the locking mechanism (28) includes a three point male locking arrangement for engaging with the groove (32) running around the extension (20) from the head (18) of the replacement wheel connector (14).

4. A security system according to any preceding claim, wherein the locking mechanism (28) includes a key driven lock (34).

5. A security system according to any preceding claim, wherein the elongate body (24) of the locking device (22) comprises a flat surface on the one side and a curved surface on the opposite side.

6. A security system according to any preceding claim, wherein the elongate bar (30) is located in a slot (36) within the elongate body (24) of the locking device (22) and is slidable in the slot (36).

7. A security system according to claim 6, wherein the slot (36) within the elongate body (24) of the locking device (22) includes an enlarged portion (36a) for allowing the elongate bar (30) to be disconnected from the elongate body (24).

8. A security system according to any preceding claim, wherein the replacement wheel connector (14) comprises a wheel bolt (14) or a wheel nut (14).

## Patentansprüche

1. Sicherheitssystem (10) für ein Fahrzeugrad (12), wobei das Sicherheitssystem (10) umfasst:
• einen Nachrüstradverbinder (14) zum Verbinden des Fahrzeugrads (12) mit einem Fahrzeug, wobei der Radverbinder (14) einen Körper (16), einen Kopf (18), der mit einem Ende des Körpers (16) verbunden ist, und einen Fortsatz (20) von dem Kopf (18) umfasst, wobei der Fortsatz (20) kleiner ist als der Kopf (18), und
• eine Verriegelungsvorrichtung (22), umfassend:
o einen länglichen Körper (24),
o einen Verriegelungskragen (26), der sich von einer Seite des länglichen Körpers (24) erstreckt und zum Verbinden des Fortsatzes (20) des Kopfs (18) des Radverbinders (14) dient,
∘ einen Verriegelungsmechanismus (28), der innerhalb des länglichen Körpers (24) enthalten ist und zum Verriegeln des Verriegelungskragens (26) auf dem Fortsatz (20) des Kopfs (18) des Radverbinders (14) dient, und
o einen länglichen Stab (30), der sich von der einen Seite des länglichen Körpers (24) erstreckt und durch das Fahrzeugrad (12) verläuft,
wobei der Verriegelungskragen (26), der sich von einer Seite des länglichen Körpers (24) der Verriegelungsvorrichtung (22) erstreckt, in der Höhe derart einstellbar ist, dass der Fortsatz des Verriegelungskragens (26) von der einen Seite des länglichen Körpers (24) einstellbar ist.

2. Sicherheitssystem nach Anspruch 1, wobei der Fortsatz (20) von dem Kopf (18) des Nachrüstradverbinders (14) mit einer Nut (32) vorgesehen ist, die um den Fortsatz (20) läuft.

3. Sicherheitssystem nach Anspruch 2, wobei der Verriegelungsmechanismus (28) eine Dreipunkt-Vorsprungverriegelungsanordnung zum Eingreifen mit der Nut (32) umfasst, die um den Fortsatz (20) von dem Kopf (18) des Nachrüstradverbinders (14) läuft.

4. Sicherheitssystem nach einem der vorhergehenden Ansprüche, wobei der Verriegelungsmechanismus (28) ein schlüsselbetätigtes Schloss (34) umfasst.

5. Sicherheitssystem nach einem der vorhergehenden Ansprüche, wobei der längliche Körper (24) der Verriegelungsvorrichtung (22) eine flache Fläche auf der einen Seite und eine gekrümmte Fläche auf der gegenüberliegenden Seite umfasst.

6. Sicherheitssystem nach einem der vorhergehenden Ansprüche, wobei sich der längliche Stab (30) in einem Schlitz (36) innerhalb des länglichen Körpers (24) der Verriegelungsvorrichtung (22) befindet und in dem Schlitz (36) verschiebbar ist.

7. Sicherheitssystem nach Anspruch 6, wobei der Schlitz (36) innerhalb des länglichen Körpers (24) der Verriegelungsvorrichtung (22) einen vergrößerten Abschnitt (36a) aufweist, um zu ermöglichen, dass der längliche Stab (30) von dem länglichen Körper (24) getrennt wird.

8. Sicherheitssystem nach einem der vorhergehenden Ansprüche, wobei der Nachrüstradverbinder (14) eine Radschraube (14) oder eine Radmutter (14) umfasst.

## Revendications

1. Système de sécurité (10) pour une roue de véhicule (12), le système de sécurité (10) comprenant :
• un connecteur de roue de remplacement (14) permettant de connecter la roue de véhicule (12) à un véhicule, le connecteur de roue (14) comprenant un corps (16), une tête (18) connectée à une extrémité du corps (16) et une extension (20) partant de la tête (18), l'extension (20) étant plus petite que la tête (18), et
• un dispositif de verrouillage (22) comprenant :
o un corps allongé (24),
o un collier de verrouillage (26) s'étendant à partir d'un côté du corps allongé (24) et destiné à être connecté à l'extension (20) de la tête (18) du connecteur de roue (14),
o un mécanisme de verrouillage (28) contenu dans le corps allongé (24) et permettant de verrouiller le collier de verrouillage (26) sur l'extension (20) de la tête (18) du connecteur de roue (14), et
∘ une barre allongée (30) s'étendant à partir d'un côté du corps allongé (24) et destinée à traverser la roue de véhicule (12),
dans lequel le collier de verrouillage (26) s'étendant à partir d'un côté du corps allongé (24) du dispositif de verrouillage (22) est réglable en hauteur de telle façon que l'extension du collier de verrouillage (26) partant d'un côté du corps allongé (24) est réglable.

2. Système de sécurité selon la revendication 1, dans lequel l'extension (20) partant de la tête (18) du connecteur de roue de remplacement (14) est pourvue d'une rainure (32) s'étendant autour de l'extension (20).

3. Système de sécurité selon la revendication 2, dans lequel le mécanisme de verrouillage (28) comprend un ensemble de verrouillage mâle en trois points destiné à s'engager avec la rainure (32) s'étendant autour de l'extension (20) partant de la tête (18) du connecteur de roue de remplacement (14).

4. Système de sécurité selon l'une quelconque des revendications précédentes, dans lequel le mécanisme de verrouillage (28) comprend un verrou entraîné par clé (34).

5. Système de sécurité selon l'une quelconque des revendications précédentes, dans lequel le corps allongé (24) du dispositif de verrouillage (22) comprend une surface plane sur un côté et une surface incurvée sur le côté opposé.

6. Système de sécurité selon l'une quelconque des revendications précédentes, dans lequel la barre allongée (30) est disposée dans une fente (36) à l'intérieur du corps allongé (24) du dispositif de verrouillage (22) et peut coulisser dans la fente (36).

7. Système de sécurité selon la revendication 6, dans lequel la fente (36) à l'intérieur du corps allongé (24) du dispositif de verrouillage (22) comprend une partie élargie (36a) permettant à la barre allongée (30) d'être déconnectée du corps allongé (24).

8. Système de sécurité selon l'une quelconque des revendications précédentes, dans lequel le connecteur de roue de remplacement (14) comprend un boulon de roue (14) ou un écrou de roue (14).
